# EUROPEAN PATENT APPLICATION

(11) **EP 4 568 333 A1**
(43) Date of publication of application: **11.06.2025**
(21) Application number: 23849334.0
(22) Date of filing: 31.07.2023
(51) Int. Cl.: H04W 24/10

(54) **QOE MEASUREMENT CONFIGURATION METHOD, AND MASTER NODE AND SECOND NODE**

(30) Priority: 01.08.2022 CN 202210918476
(71) Applicant: Datang Mobile Communications Equipment Co., Ltd., Beijing 100085 (CN)
(72) Inventor: NI, Chunlin, Beijing 100085 (CN)
(74) Representative: Cabinet Nony
(86) International application number: PCT/CN2023/110165
(87) International publication number: WO 2024/027626

(57) **Abstract**

Provided in the present disclosure are a QoE measurement configuration method, and a master node and a second node. The method comprises: a master node sending first information to a second node, wherein the first information carries first identification information, the first identification information being one or more pieces of identification information for QoE measurement available to the second node.

## Description

### CROSS-REFERENCES TO RELATED APPLICATIONS

The present application claims priority to Chinese patent application No. 202210918476.8 filed on August 01, 2022, entitled "QoE Measurement Configuration Method, and Master Node and Second Node", which is hereby incorporated by reference in its entirety.

### FIELD

The present application relates to the field of communications, and in particular, to configuration methods for quality of experience (QoE) measurement, a primary node, and a secondary node.

### BACKGROUND

A goal of new radio (NR) quality of experience (QoE) is to collect QoE parameters for different service types. In case that the core network or operation administration and maintenance (OAM) transmits QoE configuration to the network side, the network side forwards the QoE configuration to a user equipment (UE) through the wireless access network (RAN). The UE collects associated QoE measurement reports and reports to the RAN side, and then the RAN reports that to the server. In case that the UE is configured as dual connection (DC), both the master node (MN) and the secondary node (SN) may configure QoE. In case that MN and SN transmit QoE configuration to UE respectively, there may be conflicts in the identification information for QoE measurement.

### BRIEF SUMMARY

The embodiments of the present application provide configuration methods for quality of experience (QoE) measurement, a master node (MN), and a secondary node (SN), to solve the defect in the related art that in a dual connection (DC) situation, in case that MN and SN transmit QoE configuration to a user equipment (UE) respectively, there may be conflicts in the identification information for QoE measurement.

An embodiment of the present application provides a configuration method for QoE measurement, performed by a master node, including:
transmitting first information to a secondary node, where the first information carries first identification information, and the first identification information is one or more pieces of identification information for QoE measurement available to the secondary node.

In some embodiments, the first information includes at least one of the following:
Xn information for adding a secondary node;
Xn information for modifying a secondary node; or
confirm information of Xn information for requesting the master node to modify a secondary node.

In some embodiments, before transmitting the first information to the secondary node, the method further includes:
receiving second information transmitted from the secondary node, where the second information carries second identification information, and the second identification information is one or more pieces of identification information for QoE measurement that the secondary node no longer uses.

In some embodiments, the second information includes: Xn information for requesting the master node to modify a secondary node.

An embodiment of the present application further provides a configuration method for QoE measurement, performed by a secondary node, including:
receiving first information transmitted from a master node, where the first information carries first identification information, and the first identification information is one or more pieces of identification information for QoE measurement available to the secondary node; and
transmitting QoE measurement configuration to a terminal, where identification information in the QoE measurement configuration is one piece of the identification information in the first identification information.

In some embodiments, the first information includes at least one of the following:
Xn information for adding a secondary node;
Xn information for modifying a secondary node; or
confirm information of Xn information for requesting the master node to modify a secondary node.

In some embodiments, before receiving the first information transmitted from the master node, the method further includes:
transmitting second information to the master node, where the second information carries second identification information, and the second identification information is one or more pieces of identification information for QoE measurement that the secondary node no longer uses.

In some embodiments, the second information includes: Xn information for requesting the master node to modify a secondary node.

An embodiment of the present application further provides a master node, including a memory, a transceiver, and a processor, where,
the memory is used for storing a computer program; the transceiver is used for transmitting and receiving data under control of the processor; and the processor is used for reading the computer program in the memory and performing the configuration method for QoE measurement performed by the master node described above.

An embodiment of the present application further provides a secondary node, including a memory, a transceiver, and a processor, where,
the memory is used for storing a computer program; the transceiver is used for transmitting and receiving data under control of the processor; and the processor is used for reading the computer program in the memory and performing the configuration method for QoE measurement performed by the secondary node described above.

An embodiment of the present application further provides a configuration apparatus for QoE measurement, including: a first transmitting unit, used for transmitting first information to a secondary node, where the first information carries first identification information, and the first identification information is one or more pieces of identification information for QoE measurement available to the secondary node.

An embodiment of the present application further provides a configuration apparatus for QoE measurement, including: a second receiving unit, used for receiving first information transmitted from a master node, where the first information carries first identification information, and the first identification information is one or more pieces of identification information for QoE measurement available to the secondary node; and a second transmitting unit, used for transmitting QoE measurement configuration to a terminal, where identification information in the QoE measurement configuration is one piece of the identification information in the first identification information.

An embodiment of the present application further provides a processor-readable storage medium, where the processor-readable storage medium stores a computer program for causing a processor to perform the steps of any of the configuration methods for QoE measurement as described above.

In the configuration methods for QoE measurement, master node, and secondary node provided in the embodiments of the present application, by indicating the first identification information to the SN, where the first identification information is one or more pieces of identification information of the available QoE measurement, when configuring QoE measurements, the SN may select one piece of identification information within the range of the first identification information to configure for the terminal, which ensures that there is no conflicts in the identification information between the QoE configurations of MN and SN.

### BRIEF DESCRIPTION OF THE DRAWINGS

To illustrate solutions in the embodiments of the present application or the related art more clearly, the drawings used in the descriptions of the embodiments or the related art are briefly described below. The drawings in the following description are some embodiments of the present application, and other drawings may be obtained based on these drawings without any creative effort for those skilled in the related art.
FIG. 1 is a schematic diagram of dual connection in the related art;
FIG. 2 is a first schematic flowchart of a configuration method for quality of experience (QoE) measurement according to an embodiment of the present application;
FIG. 3 is a second schematic flowchart of a configuration method for QoE measurement according to an embodiment of the present application;
FIG. 4 is a first schematic interactive flowchart of a configuration method for QoE measurement according to an embodiment of the present application;
FIG. 5 is a second schematic interactive flowchart of a configuration method for QoE measurement according to an embodiment of the present application;
FIG. 6 is a third schematic interactive flowchart of a configuration method for QoE measurement according to an embodiment of the present application;
FIG. 7 is a schematic structural diagram of a master node according to an embodiment of the present application;
FIG. 8 is a schematic structural diagram of a secondary node according to an embodiment of the present application;
FIG. 9 is a first schematic structural diagram of a configuration apparatus for QoE measurement according to an embodiment of the present application; and
FIG. 10 a second schematic structural diagram of a configuration apparatus for QoE measurement according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

The embodiments of the present application provide a configuration method for quality of experience (QoE) measurement to solve the defect in the related art that in a dual connection (DC) situation, in case that a master node (MN) and a secondary node (SN) transmit QoE configuration to user equipment (UE) respectively, there may be conflicts in the identifiers (IDs) of the radio resource control (RRC) layers for QoE measurement.

The method and the apparatus provided by the embodiments of the present application are based on the same concept, the implementation of the apparatus and the method may be referred to each other since the principles of the method and the apparatus are similar, and the repetition are not repeated.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be called as user equipment (UE). A wireless terminal device may communicate with one or more core networks (CN) via a radio access network (RAN), and the wireless terminal device may be a mobile terminal device, such as a mobile phone (or cellular phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include a plurality of cells providing services for the terminal. Depending on the specific application, the base station may also be called an access point, or may be a device in the access network that communicates with wireless terminal device through one or more sectors on the air interface, or other names. Network device may be used to exchange received air frames with Internet Protocol (IP) packets, and act as a router between wireless terminal device and the rest of the access network, and the rest of the access network may include an IP communication network. The network side devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The NR protocol defines two types of QoE measurement, one is signaling-based, which involves an operation administration and maintenance (OAM) transmitting QoE configuration to a CN, the CN transmitting the QoE configuration to an RAN side, and the RAN side forwarding the QoE configuration to UE, and this configuration is specific to a particular UE; another is management-based, which involves OAM directly transmitting QoE configuration to the RAN side, and the RAN side forwarding the QoE configuration to the UE, and this configuration is currently configured for multiple UEs. In the system framework of two measurement configuration of signaling-based and management-based, the procedure of transmitting QoE configuration from the RAN side to the UE is the same, and the configuration parameters are also the same, both transmitted to the UE through RRC signaling.

After the access stratum (AS) of the UE receives the QoE configuration through RRC message, the AS transmits the QoE configuration to an application stratum through the directory defined by an attention command (AT command). In case that the service of the corresponding service type of the configuration starts, the application stratum begins to measure based on the configuration file and generates a QoE measurement report based on the configuration condition. Once the QoE measurement report is generated, the application stratum of the UE transmits the QoE measurement report to the AS of the UE through an AT command, and the AS of the UE immediately transmits the QoE measurement report to the RAN through RRC message. RAN transmits the report to a corresponding server corresponding to the IP address defined in the configuration file. Thus, the QoE configuration and measurement report collection procedure is completed.

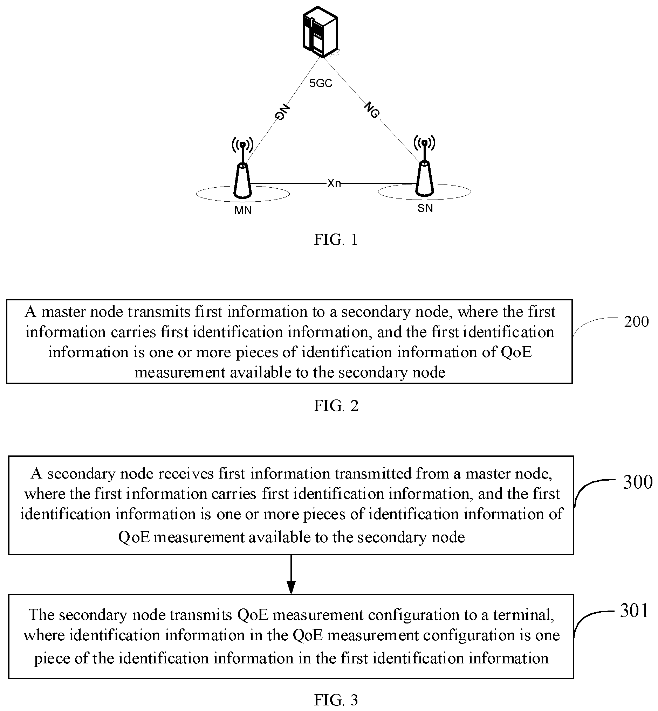

UE may operate in a dual connection state in NR system and simultaneously connect two nodes, namely MN and SN. FIG. 1 is a schematic diagram of dual connection in the related art. As shown in FIG. 1, UE transmits control plane signaling through signaling radio bearers (SRBs) SRB 1 and SRB2 in MN, and transmits control plane signaling through SRB3 in SN. In case that the UE is configured as dual connection, both MN and SN may configure QoE. In case that MN and SN transmit QoE configuration to UE respectively, there may be conflicts in the identification information for QoE measurement.

FIG. 2 is a first schematic flowchart of a configuration method for quality of experience (QoE) measurement according to an embodiment of the present application. As shown in FIG. 2, the embodiments of the present application provide a configuration method for QoE measurement, which may be performed by a master node. The method includes:
step 200: transmitting first information to a secondary node, where the first information carries first identification information, and the first identification information is one or more pieces of identification information for QoE measurement available to the secondary node.

In an embodiment, MN transmits the first information to SN, indicating one or more pieces of identification information for QoE measurement available to SN.

In case of configuring QoE measurement, SN may use one piece of the identification information in the first identification information.

In an embodiment, the identification information is a radio resource control identifier (RRC ID), which is the identification information carried during the transmission of RRC messages and used to identify a QoE measurement.

In an embodiment, the identification information may be other information that may identify QoE measurements, i.e., any traditional or future identification information that may be used to identify may be applied to this, which is not limited in the present application.

In some embodiments, the first information includes at least one of the following:
Xn information for adding a secondary node;
Xn information for modifying a secondary node; or
confirm information of Xn information for requesting the master node to modify a secondary node.

In an embodiment, the first information is Xn information for adding a secondary node (e.g., S-NODE ADDITION REQUEST), which is one or more pieces of identification information for available QoE measurements that MN carries when adding SN.

In an embodiment, the first information is Xn information for modifying a secondary node (e.g., S-NODE MODIFICATION REQUEST), which is one or more pieces of identification information for available QoE measurements that MN carries when modifying SN.

In an embodiment, the first information is confirm information of Xn information for requesting the master node to modify a secondary node (e.g., S-NODE MODIFICATION CONFIRM). In an embodiment, the secondary node first transmits the Xn information for requesting to modify the secondary node to the master node, and then the master node transmits the first information to the secondary node, where the first information is the confirm information of Xn information, and the Xn information is transmitted from the secondary node for requesting the master node to modify the secondary node. MN feeds back one or more pieces of identification information for available QoE measurements to SN through the first information.

In some embodiments, before transmitting the first information to the secondary node, the method further includes:
receiving second information transmitted from the secondary node, where the second information carries second identification information, and the second identification information is one or more pieces of identification information for QoE measurement that the secondary node no longer uses.

In an embodiment, MN receives the second information transmitted from SN, and obtains one or more pieces of identification information for QoE measurement that SN no longer uses. After receiving the one or more pieces of identification information for QoE measurement that SN no longer uses, MN feeds back one or more pieces of identification information for available QoE measurements to SN.

In an embodiment, the second information includes: Xn information for requesting the master node to modify a secondary node (e.g., S-NODE MODIFICATION REQUIRED).

In an embodiment, in the case that the first information is the confirm information of Xn information for requesting the master node to modify a secondary node, SN transmits the second information to MN, where the second information is the Xn information for requesting the master node to modify a secondary node, and the second information carries one or more pieces of identification information for QoE measurement that SN no longer uses. After receiving one or more pieces of identification information for QoE measurement that SN no longer uses, MN feeds back one or more pieces of identification information for available QoE measurements to SN.

In the configuration method for QoE measurement provided in the embodiments of the present application, MN indicates the first identification information to SN, where the first identification information is one or more pieces of identification information for available QoE measurements. As such, when configuring QoE measurements, SN may select one piece of the identification information from the first identification information to configure for the terminal, which ensures that there is no conflicts in the identification information between the QoE configurations of MN and SN.

FIG. 3 is a second schematic flowchart of a configuration method for quality of experience (QoE) measurement according to an embodiment of the present application. As shown in FIG. 3, the embodiments of the present application provide a configuration method for QoE measurement, which may be performed by a secondary node. The method includes the following steps.

Step 300: receiving first information transmitted from a master node, where the first information carries first identification information, and the first identification information is one or more pieces of identification information for QoE measurement available to the secondary node.

In an embodiment, MN transmits the first information to SN to indicate one or more pieces of identification information for QoE measurement available to SN, and SN receives the first information transmitted from MN to obtain the first identification information.

In an embodiment, the identification information is a radio resource control identifier (RRC ID), which is the identification information carried during the transmission of RRC messages and used to identify a QoE measurement.

Step 301: transmitting QoE measurement configuration to a terminal, where identification information in the QoE measurement configuration is one piece of the identification information in the first identification information.

In case of configuring QoE measurement, SN may use one piece of identification information in the range of the first identification information. The secondary node transmits the QoE measurement configuration to the terminal, and the identification information in the QoE measurement configuration is one piece of the identification information in the first identification information.

In an embodiment, the first information includes at least one of the following:
Xn information for adding a secondary node;
Xn information for modifying a secondary node; or
confirm information of Xn information for requesting the master node to modify a secondary node.

In an embodiment, the first information is Xn information for adding a secondary node (e.g., S-NODE ADDITION REQUEST), which is one or more pieces of identification information for available QoE measurements that MN carries when adding SN.

In an embodiment, the first information is Xn information for modifying a secondary node (e.g., S-NODE MODIFICATION REQUEST), which is one or more pieces of identification information for available QoE measurements that MN carries when modifying SN.

In an embodiment, the first information is confirm information of Xn information for requesting the master node to modify a secondary node (e.g., S-NODE MODIFICATION CONFIRM). In an embodiment, the secondary node first transmits the Xn information for requesting to modify the secondary node to the master node, and then the master node transmits the first information to the secondary node, where the first information is the confirm information of Xn information, and the Xn information is transmitted from the secondary node for requesting the master node to modify the secondary node. MN feeds back one or more pieces of identification information for available QoE measurements to SN through the first information.

In some embodiments, before receiving the first information transmitted from the master node, the method further includes:
transmitting second information to the master node, where the second information carries second identification information, and the second identification information is one or more pieces of identification information for QoE measurement that the secondary node no longer uses.

In an embodiment, SN transmits the second information to MN, where the second information is used to indicate to MN one or more pieces of identification information for QoE measurement that SN no longer uses. After receiving one or more pieces of identification information for QoE measurement that SN no longer uses, MN feeds back the first information to SN, where the first information carries one or more pieces of identification information for available QoE measurements.

In an embodiment, the second information includes: Xn information for requesting the master node to modify a secondary node (e.g., S-NODE MODIFICATION REQUIRED).

In an embodiment, in the case that the first information is the confirm information of Xn information for requesting the master node to modify a secondary node, SN transmits the second information to MN, where the second information is the Xn information for requesting the master node to modify a secondary node, and the second information carries one or more pieces of identification information for QoE measurement that SN no longer uses. After receiving one or more pieces of identification information for QoE measurement that SN no longer uses, MN transmits the first information to SN, where the first information carries one or more pieces of identification information for available QoE measurements.

In the configuration method for QoE measurement provided in the embodiments of the present application, SN receives the first identification information transmitted from MN, where the first identification information is one or more pieces of identification information for available QoE measurements. As such, when configuring QoE measurements, SN may select one piece of the identification information from the first identification information to configure for the terminal, which ensures that there is no conflicts in the identification information between the QoE configurations of MN and SN.

The configuration method for QoE measurement provided in the present application is further described through following embodiments.

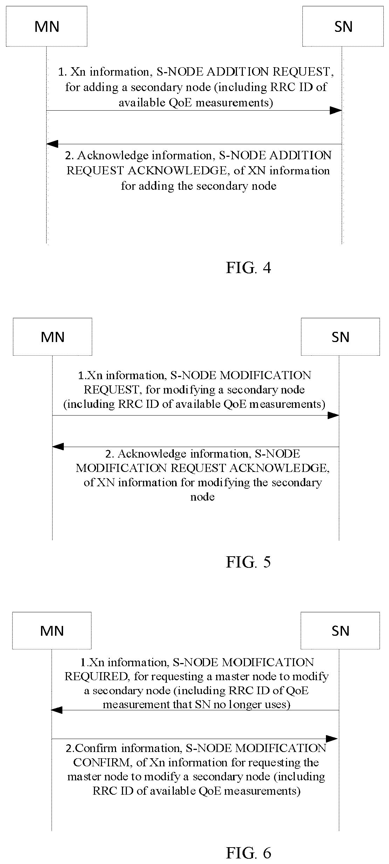

FIG. 4 is a first schematic interactive flowchart of a configuration method for QoE measurement according to an embodiment of the present application. As shown in FIG. 4, the method includes:
step 1: MN transmits information to SN via Xn information S-NODE ADDITION REQUEST, which includes one or more pieces of identification information (RRC ID) of available QoE measurements; and
step 2: SN replies with an acknowledge message.

FIG. 5 is a second schematic interactive flowchart of a configuration method for QoE measurement according to an embodiment of the present application. As shown in FIG. 5, the method includes:
Step 1: MN transmits information to SN via Xn information S-NODE MODIFICATION REQUEST, which includes one or more pieces of identification information (RRC ID) of available QoE measurements; and
Step 2: SN replies with an acknowledge message.

FIG. 6 is a third schematic interactive flowchart of a configuration method for QoE measurement according to an embodiment of the present application. As shown in FIG. 6, the method includes:
Step 1: SN transmits information to MN via Xn information S-NODE MODIFICATION REQUIRED, which includes one or more pieces of identification information (RRC ID) of QoE measurement that SN no longer uses; and
Step 2: MN replies with a confirm message, which may include one or more pieces of identification information (RRC ID) of new available QoE measurements.

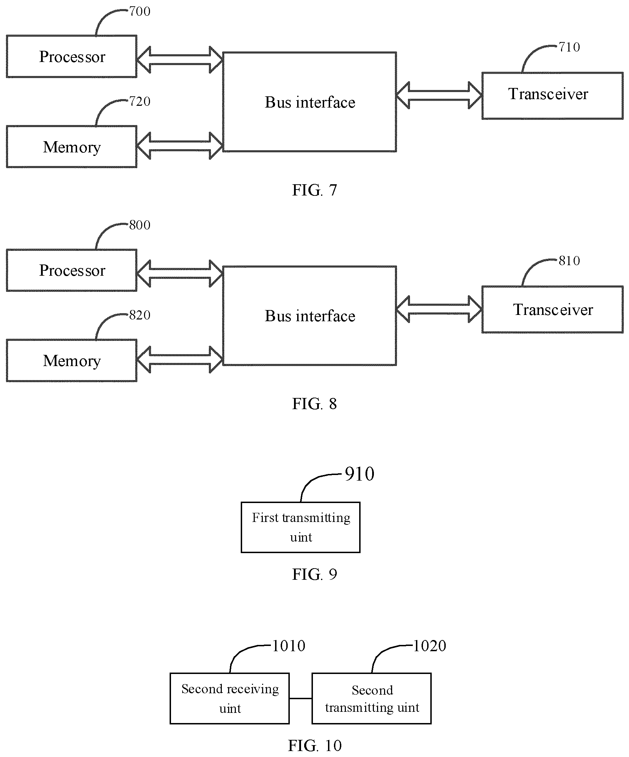

FIG. 7 is a schematic structural diagram of a master node according to an embodiment of the present application. As shown in FIG. 7, the master node includes a memory 720, a transceiver 710, and a processor 700, where
the memory 720 is used for storing a computer program; the transceiver 710 is used for receiving and transmitting data under control of the processor 700; and the processor 700 is used for reading the computer program in the memory 720 and performing the following operations:
transmitting first information to a secondary node, where the first information carries first identification information, and the first identification information is one or more pieces of identification information for QoE measurement available to the secondary node.

In an embodiment, the first information includes at least one of the following:
Xn information for adding a secondary node;
Xn information for modifying a secondary node; or
confirm information of Xn information for requesting the master node to modify a secondary node.

In an embodiment, the processor 700 is further used for:
receiving second information transmitted from the secondary node, where the second information carries second identification information, and the second identification information is one or more pieces of identification information for QoE measurement that the secondary node no longer uses.

In an embodiment, the second information includes: Xn information for requesting the master node to modify a secondary node.

The transceiver 710 is used for receiving and transmitting data under control of the processor 700.

In FIG. 7, a bus architecture may include any quantity of interconnected buses and bridges, which are linked together through various circuits of one or more processors represented by processor 700 and one or more memories represented by the memory 720. The bus architecture may also link together various other circuits, such as peripherals, voltage regulators, and power management circuits, which are well known in the art, and therefore are not further described in the present application. The bus interface provides an interface. The transceiver 710 may be multiple elements, i.e., including a transmitter and a receiver, units for providing communication with various other devices over transmission media including wireless channels, wired channels, fiber optic cables, and the like. The processor 700 is responsible for managing the bus architecture and general processing, and the memory 720 may store data used by the processor 700 when performing operations.

The processor 700 may be a central processing unit (CPU), an application specific integrated circuit (ASIC), a field-programmable gate array (FPGA), or a complex programmable logic device (CPLD), the processor may also use a multi-core architecture.

It should be noted that the above-mentioned master node provided in the embodiments of the present application may implement all the method steps implemented in the above-mentioned master node side method embodiments, and may achieve the same technical effects. The same parts and beneficial effects as the method embodiments in this embodiment are not described here.

FIG. 8 is a schematic structural diagram of a secondary node according to an embodiment of the present application. As shown in FIG. 8, the secondary node includes a memory 820, a transceiver 810, and a processor 800, where
the memory 820 is used for storing a computer program; the transceiver 810 is used for receiving and transmitting data under control of the processor 800; and the processor 800 is used for reading the computer program in the memory 820 and performing the following operations:
receiving first information transmitted from a master node, where the first information carries first identification information, and the first identification information is one or more pieces of identification information for QoE measurement available to the secondary node; and
transmitting QoE measurement configuration to a terminal, where identification information in the QoE measurement configuration is one piece of the identification information in the first identification information.

In an embodiment, the first information includes at least one of the following:
Xn information for adding a secondary node;
Xn information for modifying a secondary node; or
confirm information of Xn information for requesting the master node to modify a secondary node.

In an embodiment, the processor 800 is further used for:
transmitting second information to the master node, where the second information carries second identification information, and the second identification information is one or more pieces of identification information for QoE measurement that the secondary node no longer uses.

In an embodiment, the second information includes: Xn information for requesting the master node to modify a secondary node.

The transceiver 810 is used for receiving and transmitting data under control of the processor 800.

In FIG. 8, a bus architecture may include any quantity of interconnected buses and bridges, which are linked together through various circuits of one or more processors represented by processor 800 and one or more memories represented by the memory 820. The bus architecture may also link together various other circuits, such as peripherals, voltage regulators, and power management circuits, which are well known in the art, and therefore are not further described in the present application. The bus interface provides an interface. The transceiver 810 may be multiple elements, i.e., including a transmitter and a receiver, units for providing communication with various other devices over transmission media including wireless channels, wired channels, fiber optic cables, and the like. The processor 800 is responsible for managing the bus architecture and general processing, and the memory 820 may store data used by the processor 800 when performing operations.

The processor 800 may be a central processing unit (CPU), an application specific integrated circuit (ASIC), a field-programmable gate array (FPGA), or a complex programmable logic device (CPLD), the processor may also use a multi-core architecture.

It should be noted that the above-mentioned secondary node provided in the embodiments of the present application may implement all the method steps implemented in the above-mentioned secondary node side method embodiments, and may achieve the same technical effects. The same parts and beneficial effects as the method embodiments in this embodiment are not described here.

FIG. 9 is a first schematic structural diagram of a configuration apparatus for QoE measurement according to an embodiment of the present application. As shown in FIG. 9, the apparatus includes:
a first transmitting unit 910, used for transmitting first information to a secondary node, where the first information carries first identification information, and the first identification information is one or more pieces of identification information for QoE measurement available to the secondary node.

In an embodiment, the first information includes at least one of the following:
Xn information for adding a secondary node;
Xn information for modifying a secondary node; or
confirm information of Xn information for requesting the master node to modify a secondary node.

In an embodiment, the apparatus further includes:
a first receiving unit, used for receiving second information transmitted from the secondary node, where the second information carries second identification information, and the second identification information is one or more pieces of identification information for QoE measurement that the secondary node no longer uses.

In an embodiment, the second information includes: Xn information for requesting the master node to modify a secondary node.

It should be noted that the above-mentioned apparatus provided in the embodiments of the present application may implement all the method steps implemented in the above-mentioned master node side method embodiments, and may achieve the same technical effects. The same parts and beneficial effects as the method embodiments in this embodiment are not described here.

FIG. 10 a second schematic structural diagram of a configuration apparatus for QoE measurement according to an embodiment of the present application. As shown in FIG. 10, the apparatus includes:
a second receiving unit 1010, used for receiving first information transmitted from a master node, where the first information carries first identification information, and the first identification information is one or more pieces of identification information for QoE measurement available to the secondary node; and
a second transmitting unit 1020, used for transmitting QoE measurement configuration to a terminal, where identification information in the QoE measurement configuration is one piece of the identification information in the first identification information.

In an embodiment, the first information includes at least one of the following:
Xn information for adding a secondary node;
Xn information for modifying a secondary node; or
confirm information of Xn information for requesting the master node to modify a secondary node.

In an embodiment, the apparatus further includes:
a third transmitting unit, used for transmitting second information to the master node, where the second information carries second identification information, and the second identification information is one or more pieces of identification information for QoE measurement that the secondary node no longer uses.

In an embodiment, the second information includes: Xn information for requesting the master node to modify a secondary node.

It should be noted that the above-mentioned apparatus provided in the embodiments of the present application may implement all the method steps implemented in the above-mentioned secondary node side method embodiments, and may achieve the same technical effects. The same parts and beneficial effects as the method embodiments in this embodiment are not described here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of software functional unit and sold or used as a separate product, it may be stored in a computer readable storage medium. Based on such understanding, the solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or a compact disk.

An embodiment of the present application further provides a processor-readable storage medium, where the processor-readable storage medium stores a computer program for causing a processor to perform any of the configuration methods for QoE measurement provided in the above embodiments and may achieve the same technical effects, which are not repeated here.

The processor-readable storage medium may be any available medium or data storage device that may be accessed by a processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flowcharts and/or block diagrams of methods, devices (systems), and computer program products according to embodiments of the present application. Each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A configuration method for quality of experience (QoE) measurement, performed by a master node, comprising:
transmitting first information to a secondary node, wherein the first information carries first identification information, and the first identification information is one or more pieces of identification information for QoE measurement available to the secondary node.

2. The configuration method of claim 1, wherein the first information comprises at least one of the following:
Xn information for adding a secondary node;
Xn information for modifying a secondary node; or
confirm information of Xn information for requesting the master node to modify a secondary node.

3. The configuration method of claim 1 or 2, further comprising:
receiving second information transmitted from the secondary node, wherein the second information carries second identification information, and the second identification information is one or more pieces of identification information for QoE measurement that the secondary node no longer uses.

4. The configuration method of claim 3, wherein the second information comprises: Xn information for requesting the master node to modify a secondary node.

5. A configuration method for quality of experience (QoE) measurement, performed by a secondary node, comprising:
receiving first information transmitted from a master node, wherein the first information carries first identification information, and the first identification information is one or more pieces of identification information for QoE measurement available to the secondary node; and
transmitting QoE measurement configuration to a terminal, wherein identification information in the QoE measurement configuration is one piece of the identification information in the first identification information.

6. The configuration method of claim 5, wherein the first information comprises at least one of the following:
Xn information for adding a secondary node;
Xn information for modifying a secondary node; or
confirm information of Xn information for requesting the master node to modify a secondary node.

7. The configuration method of claim 5 or 6, wherein before receiving the first information transmitted from the master node, the method further comprises:
transmitting second information to the master node, wherein the second information carries second identification information, and the second identification information is one or more pieces of identification information for QoE measurement that the secondary node no longer uses.

8. The configuration method of claim 7, wherein the second information comprises: Xn information for requesting the master node to modify a secondary node.

9. A master node, comprising: a memory, a transceiver, and a processor, wherein
the memory is used for storing a computer program; the transceiver is used for receiving and transmitting data under control of the processor; and the processor is used for reading the computer program in the memory and performing the following operations:
transmitting first information to a secondary node, wherein the first information carries first identification information, and the first identification information is one or more pieces of identification information for QoE measurement available to the secondary node.

10. The master node of claim 9, wherein the first information comprises at least one of the following:
Xn information for adding a secondary node;
Xn information for modifying a secondary node; or
confirm information of Xn information for requesting the master node to modify a secondary node.

11. The master node of claim 9 or 10, wherein the processor is further used for:
receiving second information transmitted from the secondary node, wherein the second information carries second identification information, and the second identification information is one or more pieces of identification information for QoE measurement that the secondary node no longer uses.

12. The master node of claim 11, wherein the second information comprises: Xn information for requesting the master node to modify a secondary node.

13. A secondary node, comprising: a memory, a transceiver, and a processor, wherein
the memory is used for storing a computer program; the transceiver is used for receiving and transmitting data under control of the processor; and the processor is used for reading the computer program in the memory and performing the following operations:
receiving first information transmitted from a master node, wherein the first information carries first identification information, and the first identification information is one or more pieces of identification information for QoE measurement available to the secondary node; and
transmitting QoE measurement configuration to a terminal, wherein identification information in the QoE measurement configuration is one piece of the identification information in the first identification information.

14. The secondary node of claim 13, wherein the first information comprises at least one of the following:
Xn information for adding a secondary node;
Xn information for modifying a secondary node; or
confirm information of Xn information for requesting the master node to modify a secondary node.

15. The secondary node of claim 13 or 14, wherein the processor is further used for:
transmitting second information to the master node, wherein the second information carries second identification information, and the second identification information is one or more pieces of identification information for QoE measurement that the secondary node no longer uses.

16. The secondary node of claim 15, wherein the second information comprises: Xn information for requesting the master node to modify a secondary node.

17. A configuration apparatus for quality of experience (QoE) measurement, comprising:
a first transmitting unit, used for transmitting first information to a secondary node, wherein the first information carries first identification information, and the first identification information is one or more pieces of identification information for QoE measurement available to the secondary node.

18. The configuration apparatus for QoE measurement of claim 17, wherein the first information comprises at least one of the following:
Xn information for adding a secondary node;
Xn information for modifying a secondary node; or
confirm information of Xn information for requesting the master node to modify a secondary node.

19. The configuration apparatus for QoE measurement of claim 17 or 18, further comprising:
a first receiving unit, used for receiving second information transmitted from the secondary node, wherein the second information carries second identification information, and the second identification information is one or more pieces of identification information for QoE measurement that the secondary node no longer uses.

20. The configuration apparatus for QoE measurement of claim 19, wherein the second information comprises: Xn information for requesting the master node to modify a secondary node.

21. A configuration apparatus for quality of experience (QoE) measurement, comprising:
a second receiving unit, used for receiving first information transmitted from a master node, wherein the first information carries first identification information, and the first identification information is one or more pieces of identification information for QoE measurement available to the secondary node; and
a second transmitting unit, used for transmitting QoE measurement configuration to a terminal, wherein identification information in the QoE measurement configuration is one piece of the identification information in the first identification information.

22. The configuration apparatus for QoE measurement of claim 21, wherein the first information comprises at least one of the following:
Xn information for adding a secondary node;
Xn information for modifying a secondary node; or
confirm information of Xn information for requesting the master node to modify a secondary node.

23. The configuration apparatus for QoE measurement of claim 21 or 22, further comprising:
a third transmitting unit, used for transmitting second information to the master node, wherein the second information carries second identification information, and the second identification information is one or more pieces of identification information for QoE measurement that the secondary node no longer uses.

24. The configuration apparatus for QoE measurement of claim 23, wherein the second information comprises: Xn information for requesting the master node to modify a secondary node.

25. A processor-readable storage medium, wherein the processor-readable storage medium stores a computer program for causing a processor to perform the configuration method of any of claims 1 to 4, or to perform the method of any of claims 5 to 8.
